# DEMANDE DE BREVET EUROPEEN

(11) **EP 0 609 120 A1**
(43) Date de publication de la demande: **03.08.1994**
(21) Numéro de dépôt: 94400132.0
(22) Date de dépôt: 21.01.1994
(51) Int. Cl.: B60R 21/26, F16K 17/16

(54) **Procédé et dispositif pour le gonflage brusque d'un sac et son application aux sacs de protection de passagers dans un véhicule**

(30) Priorité: 28.01.1993 FR 9300888
(71) Demandeur: ECIA - EQUIPEMENTS ET COMPOSANTS POUR L'INDUSTRIE AUTOMOBILE, F-25400 Audincourt (FR)
(72) Inventeur: Rudi, Alain, F-90850 Essert (FR); Dischli, Bernard, F-67390 Marckolsheim (FR); Samirant, Michel, F-68100 Mulhouse (FR)
(74) Mandataire: Polus, Camille

(57) **Abrégé**

Selon l'invention on sépare un sac (10) à gonfler d'un réservoir de gaz sous pression (20) réunis par une canalisation (30) à l'aide d'un dispositif qui comprend deux membranes (42) étanches et frangibles qui se rompent lorsque la différence des pressions qui s'exercent sur leurs deux faces est supérieure à un seuil donné et une vanne (44) que l'on manoeuvre de manière à provoquer d'abord la rupture de la membrane côté sac puis celle côté réservoir afin de gonfler brusquement le sac.

Application aux véhicules automobiles terrestres pour ne pas utiliser de cartouche pyrotechnique.

## Description

La présente invention concerne le domaine des automobiles et, plus particulièrement, est relative aux techniques utilisées pour parfaire la sécurité des occupants d'un véhicule automobile terrestre.

Afin d'assurer la protection des occupants d'un véhicule automobile terrestre, il est classique de rendre l'habitacle de la coque ou structure pratiquement indéformable alors que des parties antérieure et postérieure de cette coque ou structure sont rendues déformables pour absorber l'énergie résultant d'un choc à composante longitudinale, repérée par rapport à l'axe du véhicule, relativement importante. De plus, pour éviter les heurts des occupants contre des parois ou organes de l'habitacle à la suite d'un tel choc, les occupants sont retenus sur leur siège par des ceintures de sécurité, le plus souvent à trois points d'ancrage, équipées d'un enrouleur de sangle qui se bloque automatiquement lorsqu'un détecteur d'accélération ou de décélération capte un changement d'accélération supérieur à un seuil donné, afin de retenir fermement les occupants sur leur siège.

Pour parfaire la sécurité des occupants, certains véhicules sont aussi équipés d'un sac de protection déployable, qui se gonfle automatiquement lorsque le seuil prédéterminé en question est atteint ou dépassé. Un tel sac se déploie entre la tête et le torse de l'occupant et les parties du véhicule qui sont situées devant lui, afin de former un matelas élastique pour protéger notamment la tête de toute rencontre avec le volant ou la planche de bord par exemple.

Habituellement, le déploiement et le gonflage d'un tel sac est obtenu à l'aide d'une cartouche pyrotechnique dont l'amorce est mise à feu par un détecteur de changement d'accélération du type, par exemple, utilisé pour le blocage des enrouleurs de sangle de sécurité ou pour la "décondamnation" automatique des portières dotées d'un verrouillage centralisé. La mise à feu de cette cartouche pyrotechnique assure aussi la génération des gaz nécessaires au gonflage, pratiquement instantané, du sac.

La génération des gaz pour le gonflage d'un tel sac doit obéir à une certaine cinématique quant au volume et à la pression notamment, et en particulier à la forme du front d'onde. En effet, la mise à feu de la cartouche pyrotechnique doit d'abord entraîner la rupture du conteneur dans lequel est logé le sac de protection puis provoquer son déploiement par inertie. C'est ainsi qu'après une crête de pression environ 1 ms après la mise à feu, celle-ci baisse du fait de l'augmentation brusque du volume libre résultant du déploiement du sac, et que la pression remonte environ après 25 ms pour atteindre progressivement une pression de l'ordre de 1,6 Bar ou 1,6 hPa après 190 ms. Le sac est gonflé à son maximum après 30 ms. Une telle cinématique obtenue par une cartouche pyrotechnique donne satisfaction mais n'est pas sans présenter d'inconvénients.

En effet, le stockage et la conservation de grandes quantités de cartouches pyrotechniques soulèvent de nombreux problèmes, délicats à résoudre, à la fois pour satisfaire à des normes édictées par les Pouvoirs Publics en la matière, et à des contraintes de sécurité pour les personnels et les bâtiments imposées par la législation du travail et les compagnies d'assurances.

On comprend donc tout l'intérêt qu'il y a à pouvoir disposer d'une technique qui reproduit aussi fidèlement que possible le mode opératoire d'une cartouche pyrotechnique pour assurer un gonflage d'un sac de protection déployable mais sans faire appel à une cartouche pyrotechnique.

Le but de l'invention est d'assurer le gonflage brusque d'un sac de protection déployable à l'aide d'un gaz comprimé contenu dans un réservoir relié à un sac par une canalisation, sans faire appel à une cartouche pyrotechnique.

L'invention a pour objet un procédé pour le gonflage brusque d'un sac de protection déployable à l'aide d'un gaz comprimé en provenance d'une source. Ce procédé est remarquable en ce qu'on isole la source du sac à l'aide de deux membranes étanchés et frangibles qui sont aptes à se rompre lorsque la différence des pressions qui s'exercent sur leurs deux faces opposées est supérieure à un seuil prédéterminé et qui sont placées en cascade l'une après l'autre, on établit des pressions de valeurs données respectivement sur la face côté sac, sur les faces en vis-à-vis et sur la face côté réservoir des membranes et de valeur croissante du sac à la source de manière que la différence des valeurs données des pressions qui s'exercent sur les deux faces opposées d'une membrane soit inférieure à ce seuil prédéterminé et de manière que la combinaison de la somme des valeurs données des pressions s'exerçant sur la face côté source et sur les faces en vis-à-vis diminuée de la valeur donnée de la pression s'exerçant sur la face côté sac soit supérieure à ce seuil donné prédéterminé, et en ce qu'on met en communication les deux faces opposées de la membrane proche de la source pour d'abord produire la rupture de la membrane côté sac et ensuite la rupture de la membrane côté source afin de libérer le gaz de la source pour gonfler brusquement le sac.

L'invention a aussi pour objet un dispositif pour le gonflage brusque d'un sac de protection déployable à l'aide d'un gaz comprimé contenu dans un réservoir relié au sac par une canalisation présentant un embout amont réuni au réservoir et un embout aval réuni au sac. Ce dispositif est remarquable en ce qu'il est placé sur cette canalisation intercalé entre ses embouts et en ce qu'il comprend une chambre délimitée par deux membranes étanches et frangibles qui sont aptes à se rompre lorsque la différence des pressions qui s'exercent sur leurs deux faces opposées est supérieure à un seuil prédéterminé et qui sont disposées successivement en cascade l'une amont du côté du réservoir et l'autre aval du côté du sac, une tubulure avec un tronc commun relié au réservoir et deux branches raccordées au tronc commun et reliées l'une amont à la canalisation entre réservoir et membrane amont et l'autre aval à la canalisation au niveau de la chambre entre membranes amont et aval, et une vanne avec au moins un robinet aval sur la branche aval. Ce dispositif est aussi remarquable en ce que, à l'état initial, le robinet aval étant fermé la pression P_{A} du côté sac sur la membrane aval, la pression P₁ dans la chambre et la pression P₂ du côté réservoir sur la membrane amont vont croissant du sac au réservoir, les différences de pression (P₁-P_{A}) et (P₂-P₁) s'exerçant respectivement sur les deux faces opposées de la membrane aval et de la membrane amont étant inférieures chacune à ce seuil prédéterminé et la combinaison des pressions (P₂+P₁-P_{A}) étant supérieure à ce seuil, de manière que l'ouverture du robinet aval provoque successivement la rupture de la membrane aval puis la rupture de la membrane amont pour libérer le gaz comprimé du réservoir afin de gonfler brusquement le sac.

L'invention a en outre pour objet l'application de la technique qui précède à la protection d'au moins un occupant notamment d'une place avant d'un véhicule automobile par exemple terrestre.

D'autres caractéristiques de l'invention ressortiront de la lecture de la description et des revendications qui suivent ainsi que de l'examen des figures du dessin, donné seulement à titre d'exemple, où:
- la Figure 1 est une vue schématique d'un mode de réalisation d'un dispositif selon l'invention; et,
- la Figure 2 est une vue de détail de la réalisation illustrée sur la Figure 1.

Les techniques utilisées pour le gonflage brusque d'un sac déployable à l'aide d'un gaz et en particulier celles utilisées pour les sacs de protection des occupants d'un véhicule automobile terrestre étant bien connues, on ne décrira dans ce qui suit que ce qui concerne directement ou indirectement l'invention. Pour le surplus, l'homme du métier puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un mode de réalisation d'un dispositif selon l'invention avant d'en exposer la construction au besoin, et le fonctionnement par exemple pour son application à un banc d'essai au déploiement de sacs de protection d'occupants de véhicule.

Un sac 10 déployable, gonflable du type de ceux habituellement utilisés pour la protection des occupants d'un véhicule, est destiné à être gonflé brusquement à l'aide d'un gaz comprimé contenu dans cet état, dans un réservoir 20 approprié pour stocker le volume de gaz requis pour le gonflage du sac, à la pression choisie.

Le sac 10 et le réservoir 20 sont reliés par une canalisation 30 qui présente un embout 31 amont réuni au réservoir 20 et un embout 32 aval réuni au sac 10. Cette canalisation est de tout type approprié et les embouts sont adaptés respectivement au réservoir et au sac.

Un dispositif 40 est placé sur la canalisation 30 de manière à être intercalé entre les embouts 31 et 32. Le dispositif 40, comprend essentiellement, une chambre 41, deux membranes 42, une tubulure 43 et une vanne 44.

La chambre 41 se présente à la manière d'une tuyère 410 médiane avec à chacune de ses extrémités une bride 411, 412. Chacune de ces deux brides est destinée à coopérer avec une bride 311, 322 complémentaire qui équipe chacun des embouts 31, 32, respectivement.

De préférence au moins une bride de chacun de ces couples est creusée d'une gorge 400 annulaire destinée à recevoir un joint 401 d'étanchéité pour les raisons que l'on comprendra par la suite. La section droite de cette gorge ainsi que la section droite de ce joint, notamment torique fait à base de caoutchouc ou d'un élastomère par exemple, sont commensurées l'une à l'autre et choisies en fonction des règles proposées par les fabricants de joints, comme cela est classique.

Des moyens de fixation 50, de tout type classique, tels que des tirants à vis, des trous destinés à recevoir des vis et des écrous, des trous taraudés destinés à recevoir des boulons, sont utilisés pour réunir les brides et les maintenir fermement appliquées l'une contre l'autre.

Les deux membranes 42 délimitent la chambre 411. Ces membranes, étanches et frangibles sont aptes à, se rompre lorsque la différence des pressions qui s'exercent sur leurs deux faces opposées est supérieure à un seuil prédéterminé. Comme on le voit, ces membranes qui sont de préférence disposées transversalement sont placées successivement en cascade, l'une amont du côté du réservoir 20 et l'autre aval du côté du sac 10. Comme on le voit ces membranes sont de préférence montées de manière à envelopper au moins partiellement le joint.

Pour les raisons que l'on comprendra par la suite, au moins les bords des brides dirigés vers l'intérieur de la chambre n'ont pas d'arête vive et sont, de préférence, arrondis de manière à ne pas meurtrir la membrane tendue entre les brides lorsque la membrane se déforme, lorsqu'elle est soumise sur ses deux faces à des pressions différentes comme on le verra par la suite.

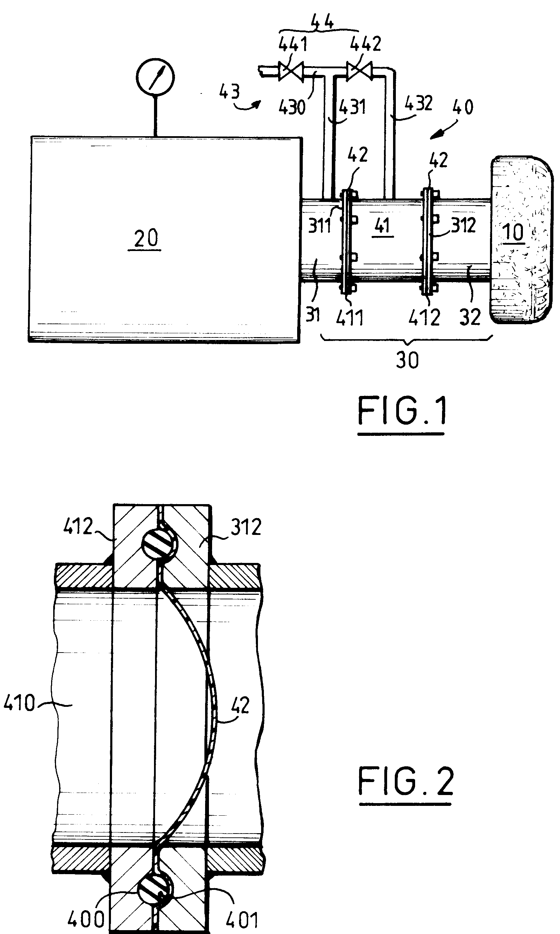

La tubulure 43 comprend un tronc 430 commun relié au réservoir 20 ou à une source de gaz sous pression et deux branches 431, 432 raccordées, d'une part, au tronc commun 430 et reliées, d'autre part, l'une la branche amont 431 à la canalisation 30 entre réservoir 20 et membrane amont 42, et l'autre la branche aval 432 à la canalisation 30 au niveau de la chambre 41 entre membranes amont et aval. Ceci est clairement illustré sur la Figure 1.

Une vanne 44 avec s'il y a lieu un robinet 441 amont placé sur le tronc commun 430, et dans tous les cas avec au moins un robinet 442 aval sur la branche aval 432 permet de mettre en communication ou d'isoler les constituants comme on le verra par la suite.

Le mode de réalisation illustré sur les Figures 1 et 2 correspond à la mise en oeuvre du procédé et du dispositif selon l'invention dans son application à un banc d'essai.

Il y a lieu de rappeler que les membranes sont choisies de manière à supporter sur leurs deux faces des pressions différentes, et sont telles qu'elles sont aptes à se rompre lorsque la différence des pressions qui s'exercent sur leurs deux faces opposées est supérieure à un seuil prédéterminé.

A l'état initial, le robinet aval 432 étant fermé on fait en sorte que la pression P_{A} du côté sac sur la membrane aval, la pression P₁ dans la chambre qui s'exerce sur les deux faces en vis-à-vis des deux membranes et la pression P₂ du côté du réservoir sur la membrane amont vont croissant du sac 10 au réservoir 20. Les différences des pressions P₁-P_{A} et P₂-P₁ qui s'exercent respectivement sur les deux faces opposées de la membrane aval et de la membrane amont, sont inférieures chacune au seuil prédéterminé indiqué auparavant. La combinaison des pressions P₂+P₁-P_{A} est, elle, supérieure à ce seuil prédéterminé. On adopte pour seuil prédéterminé la valeur 1,25 P₁ de préférence.

Cette situation étant réalisée comme on l'exposera par la suite, on ouvre le robinet aval 442. L'ouverture du robinet aval fait que la pression qui règne alors dans la chambre 41 croît brusquement à une valeur pratiquement égale à P₂+P₁ si bien que la différence P₂+P₁-P_{A} des pressions qui s'exercent brusquement sur la membrane aval est supérieure à ce seuil prédéterminé : cette augmentation brusque provoque la rupture de la membrane aval. La pression dans la chambre 41 baisse alors brusquement de valeur si bien que la différence des pressions qui s'exercent maintenant sur la membrane amont devient aussi brusquement supérieure à celle du seuil prédéterminé : ceci provoque la rupture de la membrane amont. La rupture successive, en cascade, d'abord de la membrane aval puis de la membrane amont, se fait très rapidement et le gaz comprimé du réservoir peut donc gonfler le sac.

Les dimensions et les matériaux choisis sont tels que la cinématique reproduit relativement fidèlement celle qui est obtenue traditionnellement avec une cartouche pyrotechnique.

Pour soumettre à des essais des sacs traditionnels à fuites calibrées de volume 60 litres, on utilise un réservoir de volume 90 litres sous une pression initiale de 5 bars ou hPa absolue, c'est-à-dire 4 bars ou hPa relative. La tuyère a une section d'aire de 0,005 m², soit un diamètre d'environ 80 mm. Les membranes se rompent lorsque la différence des pressions est au moins de 2,5 bars ou hPa.

A l'état initial, on ouvre les robinets 441 et 442 et on remplit le réservoir et la chambre d'un gaz comprimé sous une pression P₁ de 2 bars en provenance d'une source par exemple d'azote, et on ferme le robinet 442; le robinet 441 étant ouvert on fait monter la pression dans le réservoir à une pression P₂ de 4 bars ou hPa relative. On ferme alors le robinet 441. L'ouverture du robinet 442 entraîne la rupture de la membrane aval et le déploiement du sac initialement à la pression Pₐ, atmosphérique et la chute de pression fait se rompre ensuite la membrane amont : le flux de gaz du réservoir est libéré et gonfle le sac.

La membrane utilisée est une membrane du commerce par exemple dénommée Rhodialine d'épaisseur 150 µm.

D'autres membranes peuvent être utilisées par exemple des membranes en polyester dénommées Terfane H par la société RHONE POULENC FILM.

On peut utiliser aussi des membranes en papier calque voire métalliques.

La vanne avec ses robinets est de tout type classique, à commande manuelle ou motorisée.

Il est clair que ce qui a été décrit à propos d'un banc d'essai peut être facilement adapté à un véhicule automobile terrestre notamment pour la protection des passagers avant, tel que le conducteur par exemple. Dans un tel cas, il suffit de miniaturiser les constituants. Une partie du dispositif par exemple le réservoir de gaz sous pression peut être par exemple constitué par une partie d'une colonne de direction en faisant appel au tronçon d'arbre creux qui relie le volant au boîtier de direction ou bien par la jante et les bras du volant lui-même. De même, le dispositif peut être logé au moins partiellement dans une boîte à gants ou un vide-poche de planche de bord.

Il est clair que lorsque le dispositif selon l'invention est incorporé à une automobile, la qualité des assemblages doit être telle qu'aucune fuite notable ne se manifeste pour maintenir les pressions et les valeurs de leurs différences dans les limites qui permettent un fonctionnement sûr. Les assemblages dans un tel cas peuvent être obtenus par exemple par soudage, sertissage,.... Pour une telle application, au moins le robinet aval est commandé pour son ouverture par un détecteur d'accélération/décélération du type de ceux commandant le blocage des enrouleurs automatiques de sangle de ceinture voire de ceux provoquant la neutralisation de la condamnation centralisée des portières.

Ce qui précède met bien en lumière les particularités du procédé qui apparaîssent clairement du processus opératoire du dispositif selon l'invention.

Ce qui précède permet de comprendre l'intérêt et les avantages qu'apporte l'invention.

## Revendications

**1** - Dispositif pour le gonflage brusque d'un sac (10) de protection déployable à l'aide d'un gaz comprimé contenu dans un réservoir (20) relié au sac (10) par une canalisation (30) présentant un embout (31) amont réuni au réservoir (20) et un embout (32) aval réuni au sac (10), caractérisé en ce que ce dispositif (40) est placé sur cette canalisation (30) intercalé entre ses embouts (31, 32) et en ce qu'il (40) comprend une chambre (41) délimitée par deux membranes (42) étanches et frangibles qui sont aptes à se rompre lorsque la différence des pressions qui s'exercent sur leurs deux faces opposées est supérieure à un seuil prédéterminé et qui sont disposées successivement en cascade l'une amont du côté du réservoir (20) et l'autre aval du côté du sac (10), une tubulure (43) avec un tronc (430) commun relié au réservoir (20) et deux branches (431, 432) raccordées au tronc commun (430) et reliées l'une amont (431) à la canalisation (30) entre réservoir (20) et membrane amont et l'autre aval (432) à la canalisation (30) au niveau de la chambre (41) entre membranes amont et aval, et une vanne (44) avec au moins un robinet (442) aval sur la branche aval (432), et en ce que, à l'état initial, le robinet aval (432) étant fermé, la pression P_{A} du côté sac sur la membrane aval, la pression P₁ dans la chambre et la pression P₂ du côté réservoir sur la membrane amont vont croissant du sac au réservoir, les différences de pression (P₁-P_{A}) et (P₂-P₁) s'exerçant respectivement sur les deux faces opposées de la membrane aval et de la membrane amont étant inférieures chacune à ce seuil prédéterminé et la combinaison des pressions (P₂+P₁-P_{A}) étant supérieure à ce seuil, de manière que l'ouverture du robinet aval (432) provoque successivement la rupture de la membrane aval puis de la membrane amont pour libérer le gaz comprimé du réservoir afin de gonfler brusquement le sac.

**2** - Dispositif selon la revendication 1, caractérisé en ce que la vanne (44) comprend aussi un robinet (441) amont sur le tronc commun (430) pour le remplissage initial du réservoir (20) et de la chambre (41) en gaz respectivement à la pression P₂ et à la pression P₁.

**3** - Dispositif selon l'une quelconque des revendications 1 ou 2, caractérisé en ce que la chambre (41) comprend une tuyère (410) médiane et une bride (411,412) à chacune de ses extrémités et en ce que chacun des embouts (31,32) est muni d'une bride (311,322) complémentaire destinée à coopérer avec la bride (411, 412) correspondante de la chambre (41).

**4** - Dispositif selon la revendication 3, caractérisé en ce que les membranes (42) sont placées entre chaque couple de brides (311,411-322,412) correspondantes.

**5** - Dispositif selon la revendication 4, caractérisé en ce que l'une au moins des brides d'un couple est creusée d'une gorge (400) annulaire destinée à recevoir un joint (401) d'étanchéité.

**6** - Dispositif selon la revendication 5, caractérisé en ce que l'une au moins des membranes (42) recouvre le joint (401).

**7** - Dispositif selon l'une quelconque des revendications 1 à 6, caractérisé en ce que l'une au moins des membranes (42) est une pellicule en matériau synthétique.

**8** - Dispositif selon l'une quelconque des revendications 1 à 6, caractérisé en ce que l'une au moins des membranes (42) est métallique.

**9** - Dispositif selon l'une quelconque des revendications 1 à 6, caractérisé en ce que l'une au moins des membranes (42) est en papier calque.

**10** - Application d'un dispositif conforme à l'une quelconque des revendications précédentes, à la protection d'au moins un occupant notamment d'une place avant d'un véhicule automobile notamment terrestre.

**11** -Application selon la revendication 10, caractérisée en ce que l'ouverture du robinet aval est commandée par un détecteur d'accélération/décélération notamment du type de ceux commandant le blocage des enrouleurs automatiques de sangle de ceinture de sécurité voire de ceux provoquant la neutralisation de la condamnation centralisées des portières.

**12** - Application selon la revendication 10 ou 11, caractérisée en ce que le dispositif est logé au moins partiellement dans le volant voire dans la colonne de direction d'un véhicule.

**13** - Application selon la revendication 10 ou 11, caractérisée en ce que le dispositif est logé au moins partiellement dans une boîte à gant voire un vide poche d'une planche de bord d'un véhicule.

**14** - Application d'un dispositif conforme à l'une quelconque des revendications 1 à 9, pour l'essai au déploiement de sacs de protection d'occupants de véhicule.

**15** - Procédé pour le gonflage brusque d'un sac de protection déployable à l'aide d'un gaz comprimé en provenance d'une source, caractérisé en ce qu'on isole la source du sac à l'aide de deux membranes étanches et frangibles qui sont aptes à se rompre lorsque la différence des pressions qui s'exercent sur leurs deux faces opposées est supérieure à un seuil prédéterminé et qui sont placées en cascade l'une après l'autre, on établit des pressions de valeurs données respectivement sur la face côté sac, sur les faces en vis-à-vis et sur la face côté réservoir des membranes et de valeurs croissantes du sac à la source de manière que la différence des valeurs données des pressions qui s'exercent sur les deux faces opposées d'une membrane soit inférieure à ce seuil prédéterminé et de manière que la combinaison de la somme des valeurs données des pressions s'exerçant sur la face côté source et sur les faces en vis-à-vis diminuée de la valeur donnée de la pression s'exerçant sur la face côté sac soit supérieure à ce seuil prédéterminé, et en ce qu'on met en communication les deux faces opposées sur la membrane proche de la source pour d'abord produire la rupture de la membrane côté sac et ensuite de la membrane côté source, afin de libérer le gaz de la source pour gonfler brusquement le sac.
